# EUROPEAN PATENT SPECIFICATION

(11) **EP 1 833 314 B1**
(45) Date of publication and mention of the grant of the patent: **30.04.2008**
(21) Application number: 05784614.9
(22) Date of filing: 12.09.2005
(51) Int. Cl.: A23L 1/305, A23L 1/29

(54) **INFANT NUTRITIONAL KIT FOR REGULATION OF THE SLEEP-WAKE CYCLE**
SÄUGLINGSNAHRUNGSKIT ZUR REGULIERUNG DES SCHLAF-WACH-ZYKLUS
KIT NUTRITIONNEL POUR ENFANTS POUR LA REGULATION DU CYCLE VEILLE-SOMMEIL

(30) Priority: 29.09.2004 ES 200402352
(43) Date of publication of application: 19.09.2007
(73) Proprietor: LABORATORIOS ORDESA, S.L, 08830 Sant Boi de Llobregat, Barcelona (ES)
(72) Inventor: RIVERO URGELL, Montserrat, c/o Laboratorios Ordesa, S.L., E-08830 Sant Boi Del Llobregat (ES); CHIFRÉ PETIT, Ricard, c/o Laboratorios Ordesa, S.L., E-08830 Sant Boi Del Llobregat (ES); BARRIGA IBARS, Carmen, c/o Universidad de Extremadura, E-06071 BADAJOZ (ES); RODRIGUEZ MORATINOS, Anna Beatriz, c/o Universidad de Extremadura, E-06071 BADAJOZ (ES); RIAL PLANAS, Rubén Víctor, c/o Universitat de les Illes Balears, E-07122 Palma de Mallorca (ES); ESTEBAN VALDÉS, Susana, c/o Universitat de les Illes Balears, E-07122 Palma de Mallorca (ES)
(74) Representative: Barlocci, Anna
(86) International application number: PCT/EP2005/054516
(87) International publication number: WO 2006/034955

(56) References cited:
- EP-A- 0 951 842
- SARWAR G ET AL: "Liquid concentrates are lower in bioavailability tryptophan than powdered infant formulas, and tryptophan supplementation of formulas increases brain tryptophan and serotonin in rats" JOURNAL OF NUTRITION, WISTAR INSTITUTE OF ANATOMY AND BIOLOGY, PHILADELPHIA, PA,, US, vol. 129, no. 9, September 1999 (1999-09), pages 1692-1697, XP002310346 ISSN: 0022-3166

## Description

The invention relates to the field of food industry and particularly to infant formulations preferably made from cow's milk as an adequate substitute of human breast milk.

### BACKGROUND ART

Infant insomnia is the most common sleep disorder in healthy children. It can occur at a 35% of children younger than 5 years. It is defined by three aspects: difficulty to get to sleep once the child is lying on bed; common awakening, mainly at night, although they are also observed during the day in children younger than 12 months; and a short sleep span, and therefore a short resting time, with regard to which corresponds to the child age.

It is known that some nutritional elements can influence the sleep pattern. Tryptophan is an essential amino acid which, due to be the precursor of serotonin and melatonin neurotransmitters, helps to sleep. There are many studies about the benefits of including tryptophan in an infant formula, as well as infant specific formulations that include other elements with particular functions besides tryptophan (cf. EP 951.842 B1). SANDOZ NATUR^{®} is an infant formula which has been launched to the market indicated to improve the sleep pattern. It is enriched with alpha-lactalbumin and it reaches values of 3.7 g of tryptophan for 100 g of proteins.

Besides tryptophan, other compounds have been described with effects on sleep or wakefulness through infant diet. Thus, medium-chain triacylglycerols (MCTs) help to sleep and the B₁₂ vitamin actives wakefulness (cf. respectively, F. Telliez et al., "Feeding behaviour in neonates whose diet contained medium-chain triacylglycerols: short-term effects on thermoregulation and sleep", Am. J. Clin. Nutr. 2002, vol. 76, pp. 1091-105; T. Kiuchi et al., "Effect of vitamin B12 on sleep-wake rhythm following an 8-hour advance of the light-dark cycle in the rat", Physiol. Behav. 1997, vol. 61 pp. 551-4). The effect on sleep of uridine and adenosine nucleotides has been studied indirectly and not through ingestion (cf. respectively, T. Kimura et al., "Uridine receptor: discovery and its involvement in sleep mechanism", Sleep 2001, vol. 24, pp. 251-60; S. Morairty et al., "Disinhibition of ventrolateral preoptic area sleep-active neurons by adenosine: a new mechanism for sleep promotion", Neuroscience 2004, vol. 123(2), pp. 451-7).

Physiological functions of humans are more or less influenced by circadian control. Sleep-wake cycle is especially important in young children. Human breast milk helps breast-fed infants and new-born babies to consolidate sleep-wake cycles because breast milk comprises components which are varying along the day and night according to circadian variability and existing light. A child fed with human breast milk shows a better sleep-wake circadian rhythm and therefore, a sleep pattern closer to the physiological one than a child fed with infant formula.

Up to now, child's circadian cycle is not considered by milk formulas adapted to newborn and breast-fed infants, even though these can include sleep stimulating elements. These formulas maintain a fixed composition without variability between day and night periods, so that sleep disorders remain.

### SUMMARY OF THE INVENTION

Beyond stimulating sleep, the present invention provides the first attempt to regulate the sleep-wake cycles of the newborn and the breast-fed infant.

Thus, in a first aspect, the invention relates to an infant nutritional kit which comprises a maximum of 1.7 g of tryptophan per 100 g of total protein of said formula and; a sleep stimulating formula comprising a minimum of 3.4 g of tryptophan per 100 g of total protein of said formula.

Added tryptophan may be as free L-tryptophan, as a salt or as peptides rich in tryptophan. The source of tryptophan used should be stable under the manufacture conditions of the infant formula. Thus, the best sources of tryptophan are proteins, hydrolyzed products, serum or extracts rich in tryptophan. In this invention it is preferred to use a supplementation in alpha-lactalbumin as tryptophan source. Alpha-lactalbumin is present in human breast milk as the most abundant serum protein. It is considered as a high quality protein, being essential for the pondoestural development of the breast-fed infant. It provides a balanced profile of amino acids, a low renal charge, and a low metabolic stress over immature kidneys of the breast-fed infant. In a particular embodiment of the invention, the sleep stimulating formula of the kit has a content of tryptophan coming from alpha-lactalbumin between 0.1 and 2.2 g/100 g of total protein in the formula and, preferably, between 0.4 and 0.5 g/100 g of total protein.

In another particular embodiment of the invention, the formulas of the kit comprise nucleotides. Nucleotides are activated precursors of nucleic acids. They are present in many foodstuff of animal and vegetal origin. They mean until a 20% of the non-proteic nitrogen in human milk. In cow's milk, used for producing almost all the infant formulas, nucleotides are hardly present, being necessary to add them by an exogenous supply. The inventors have surprisingly found that a differentiated intake of nucleotides in the two formulas of the kit contributes to the regulation of the sleep-wake cycle. Thus, in a particular embodiment, in the kit of the invention, the individual amounts of the nucleotides guanosine 5'-monophosphate, cytidine 5'-monophosphate and inosine 5'-monophosphate are bigger in the wakefulness stimulating formula than in the sleep stimulating formula. And the individual amounts of the nucleotides uridine 5'-monophosphate and adenosine 5'-monophosphate are bigger in the sleep stimulating formula than in the wakefulness stimulating formula.

In another particular embodiment, the wakefulness stimulating formula contains neither uridine 5'-monophosphate nor adenosine 5'-monophosphate and, the sleep stimulating formula contains neither guanosine 5'-monophosphate, cytidine 5'-monophosphate nor inosine 5'-monophosphate.

In another particular embodiment, in the wakefulness stimulating formula, the amount of cytidine 5'-monophosphate is bigger than the individual amounts of guanosine 5'-monophosphate and inosine 5'-monophosphate. And, in the sleep stimulating formula, the amount of uridine 5'-monophosphate is bigger than the amount of adenosine 5'-monophosphate.

Particularly, in the wakefulness stimulating formula, the amount of cytidine 5'-monophosphate is between 1 and 2.5 mg/100 kcal of said formula and, preferably, 1.5 mg/100 kcal. The amount of guanosine 5'-monophosphate is between 0.1 and 0.5 mg/100 kcal and, preferably, 0.3 mg/100 kcal. The amount of inosine 5'-monophosphate in the wakefulness stimulating formula is between 0.2 and 1 mg/100 kcal and, particularly, 0.3 mg/100 kcal.

In the field of infant formulas, concentration of the components of a formula is usually given versus its energetic value; thus, in this description, mg of component / 100 kcal of the formula is used.

In the sleep stimulating formula, the amount of uridine 5'-monophosphate is between 1 and 1.75 mg/100 kcal of said formula and, preferably, 1.75 mg/100 kcal. The amount of adenosine 5'-monophosphate is between 0.5 and 1.5 mg/100 kcal and, particularly, 1.5 mg/100 kcal. Furthermore, in another particular embodiment, the sleep stimulating formula comprises medium-chain triacylglycerols (MCTs). MCTs are esters of saturated fatty acids with 6-10 carbon atoms (caprylic and capric are preferred). Preferably, the amount of MCTs is between 5 and 25% versus the total amount of fats of the sleep stimulating formula and, more preferably, a 15 % versus the total amount of fats.

In another particular embodiment, the wakefulness stimulating formula does not contain MCTs, and sleep stimulating formula does not contain poly-unsaturated fatty acids (PUFAs).

Furthermore, in another embodiment, the formulas of the kit comprise vitamins A, E, B₁₂ and C, being the individual amounts of said vitamins bigger in the wakefulness stimulating formula than in the sleep stimulating formula.

The differentiated composition with respect to tryptophan, nucleotides and other elements of the two infant formulas of the kit of the invention provides an improvement on regulation and consolidation of the child's circadian cycle of the sleep-wake phases. One formula stimulates wakefulness and the other improves sleep. At the same time, the alternated intake of one (wakefulness) and the other (sleep) formulation improves the specific action of each one. Thus, the compositions of the formulas are complementary and achieve an equilibrium, both nutritional and of the child's circadian cycles. The number of diary intakes is a standard which depends on child's age, the wakefulness stimulating formula being administered between 6 h and 18 h and the sleep stimulating formula between 18 h and 6 h.

In a second aspect, the invention provides an infant nutritional formula which stimulates wakefulness, which comprises a maximum of 1.7 g of tryptophan per 100 g of total protein, the nucleotides cytidine 5'-monophosphate, guanosine 5'-monophosphate and inosine 5'-monophosphate and does not comprise the nucleotides uridine 5'-monophosphate and adenosine 5'-monophosphate. In particular, the amount of cytidine 5'-monophosphate is bigger than the individual amounts of guanosine 5'-monophosphate and inosine 5'-monophosphate. The preferred amounts of nucleotides for the nutritional wakefulness stimulating formula are those indicated previously. In a particular embodiment, the formula does not contain MCTs.

In a third aspect, the invention provides an infant nutritional formula which stimulates sleep, which comprises a minimum of 3.4 g of tryptophan per g of total protein, the nucleotides uridine 5'-monophosphate and adenosine 5'-monophosphate and does not comprise the nucleotides cytidine 5'-monophosphate, guanosine 5'-monophosphate and inosine 5'-monophosphate. In particular, the amount of uridine 5'-monophosphate is bigger than the amount of adenosine 5'-monophosphate. The preferred amounts of tryptophan coming from the enrichment with alpha-lactalbumin and of nucleotides are those indicated previously. In a particular embodiment, the sleep stimulating formula comprises MCTs, preferably in the amount indicated previously. In another embodiment, the formula does not contain AGPIs.

Formulas for artificial lactation include other components. Besides those described above to improve sleep or wakefulness, the infant formulas of the invention will include appropriate proportions of the main macronutrients, i.e. proteins, fats, carbohydrates, and also important elements such as minerals and vitamins. Thus, nutritionally complete infant formulas will be obtained which cover the energetic demands for a breast-fed infant's optimal development. In some cases, the person skilled in the art will include, from an exogenous source, other elements which the breast-fed infant can not synthesize enough to cover its demands. Examples of them are L-carnitine, taurine, selenium and zinc. Nutritional elements which can be included to infant formulas have to observe current legislation and the recommendations from the United Nations Food and Agriculture Organization (FAO), the Committee on Nutrition of the Academy of Pediatrics and, the Committee on Nutrition of the European Society for Pediatric Gastroenterology and Nutrition.

The infant formulas of the invention can be in liquid or powder form; the last must be reconstructed with water before the intake. The person skilled in the art will know the appropriate containers for these products. For example, liquid products can be bottled in bottles, cartons, cans or boxes. Powder products can be packed in vacuum packets, tins or envelopes.

Throughout the description and claims the word "comprise" and variations of the word are not intended to exclude other technical features, additives, components, or steps. Additional objects, advantages and features of the invention will become apparent to those skilled in the art upon examination of the description or may be learned by practice of the invention. The following particular embodiments are provided by way of illustration, and are not intended to be limiting of the present invention.

### DETAILED DESCRIPTION OF PARTICULAR EMBODIMENTS

### Preparation process of the infant formulas

Cow's milk is received in refrigerated trucks and it is stored in tanks between 4 and 8 ºC. It is filtered and submitted to a pasteurization treatment at 75 ºC for 20 seconds; next, it is chilled to 48 ºC and skimmed. The skim milk is chilled to 6-8 ºC and stored. The skim milk is heat treated at 115 ºC for 3 seconds and it is concentrated from 9% of dry extract to 23%. This concentrated milk is chilled below 15 ºC and stored.

To prepare the infant formula, concentrated skim milk is filtered and heated to 70 ºC, then it is added to a mixing tank where is kept at 65 ºC with agitation. From this step on, the components added to the milk are different for the wakefulness stimulating formula or the sleep stimulating formula.

In case of the wakefulness stimulating formula, a mixture of oils at 50 °C (4680 kg of vegetal fat and 520 kg of egg fat), the minerals solved in water, the vitamins, choline, taurine, inositol, basic L-carnitine and nucleotides are added to this tank. The other components (1840 kg of demineralized serum, 2640 kg of glucose syrup and 6000 kg of lactose) are added to the tank through the Triblender.

In case of the sleep stimulating formula, the mixture of oils (4420 kg of vegetal fat and 780 kg of MCTs) at 50 ºC, the minerals solved in water, the vitamins, tryptophan, choline, taurine, inositol, basic L-carnitine and nucleotides, are added to the mixing tank. The rest of the components (1200 kg of demineralized serum, 340 kg of serum with high content of alpha-lactalbumin, 2900 kg of glucose syrup and 6250 kg of lactose) are added to the tank through the Triblender.

Once all is mixed, each is filtered and sterilized at 100 ºC for 20 seconds. The product is homogenized, chilled to 10-15 ºC and stored.

The formula is concentrated until a 50-52% of dry extract, and it is heated until 70 ºC. The product is filtered and it is homogenized again. The homogenized product is atomized in a drying tower. The exiting product from the tower is passed through a fluidic bed to dry the product and then it is filtered. The product as a dry powder is stored in storage bins and packed in sacks. The product is analyzed and is packed in composite paper bags under nitrogenous atmosphere and cased in cartonboard cases.

**TABLE 1: Final composition of the wakefulness stimulating formula (per 100 q of powder milk and 100 kcal)**

| | units | 100 g powder | 100 kcal |
|---|---|---|---|
| PROTEINS | g | 12.0 | 2.3 |
| - tryptophan | g | 0.18 | 0.035 |
| FATS | g | 26.0 | 5.1 |
| - vegetal | g (90.00%) | 23.4 | 4.6 |
| - ovothin | g (10.00%) | 2.6 | 0.5 |
| CARBOHYDRATES | g | 58.0 | 11.3 |
| - lactose | g | 44.8 | 8.7 |
| - dextrin maltose | g | 13.2 | 2.6 |
| CHOLINE | mg | 50.0 | 9.7 |
| TAURINE | mg | 32.0 | 6.2 |
| INOSITOL | mg | 25.0 | 4.9 |
| L-CARNITINE | mg | 17.0 | 3.3 |
| MINERALS | g | 2.5 | 0.5 |
| - sodium | mg | 175.0 | 34.0 |
| - potassium | mg | 535.0 | 104.1 |
| - chlorine | mg | 290.0 | 56.4 |
| - calcium | mg | 420.0 | 81.7 |
| - phosphor | mg | 230.0 | 44.7 |
| - iron | mg | 6.0 | 1.2 |
| - magnesium | mg | 42.0 | 8.2 |
| - zinc | mg | 4.4 | 0.9 |
| - copper | mcg | 300.0 | 58.4 |
| - iodine | mcg | 70.0 | 13.6 |
| - manganese | mcg | 50.0 | 9.7 |
| - selenium | mcg | 10.7 | 2.1 |
| Ca/P RATIO | | 1.8 | |
| VITAMINS | | | |
| - vitamin A | mcg | 640.0 | 124.5 |
| - vitamin D | mcg | 10.3 | 2.0 |
| - vitamin E | mg | 25.0 | 4.9 |
| - vitamin K | mcg | 42.0 | 8.2 |
| - vitamin B₁ | mcg | 520.0 | 101.2 |
| - vitamin B₂ | mcg | 620.0 | 120.6 |
| - vitamin B₆ | mcg | 825.0 | 160.5 |
| - vitamin B₁₂ | mcg | 2.6 | 0.5 |
| - vitamin C | mg | 60.0 | 11.7 |
| - folic acid | mcg | 42.0 | 8.2 |
| - calcium pantothenate | mg | 3.2 | 0.6 |
| - nicotinamide | mg | 6.0 | 1.2 |
| - biotin | mcg | 16.0 | 3.1 |
| NUCLEOTIDES | | | |
| - cytidine 5' monophosphate | mg | 7.9 | 1.5 |
| - guanosine 5'-monophosphate | mg | 1.6 | 0.3 |
| - inosine 5'-monophosphate | mg | 1.6 | 0.3 |
| ENERGETIC VALUE | kcal | 514 | |

**TABLE 2: Final composition of the sleep stimulating formula (per 100 g of powder milk and 100 kcal)**

| | units | 100 g powder | 100 kcal |
|---|---|---|---|
| PROTEINS | g | 10.7 | 2.1 |
| - alpha-lactalbumin | g | 1.6 | 0.3 |
| - tryptophan | g | 0.40 | 0.078 |
| FATS | g | 26.0 | 5.1 |
| - vegetal | g (85.00%) | 22.1 | 4.3 |
| - MCTs | g (15.00%) | 3.9 | 0.8 |
| CARBOHYDRATES | g | 59.3 | 11.5 |
| - lactose | g | 44.8 | 8.7 |
| - dextrin maltose | g | 14.5 | 2.8 |
| CHOLINE | mg | 50.0 | 9.7 |
| TAURINE | mg | 32.0 | 6.2 |
| INOSITOL | mg | 25.0 | 4.9 |
| L-CARNITINE | mg | 17.0 | 3.3 |
| MINERALS | g | 0.36 | 0.5 |
| - sodium | mg | 25.38 | 34.0 |
| - potassium | mg | 77.58 | 104.1 |
| - chlorine | mg | 42.05 | 56.4 |
| - calcium | mg | 60.90 | 81.7 |
| - phosphor | ma | 33.35 | 44.7 |
| - iron | mg | 0.87 | 1.2 |
| - magnesium | mg | 6.09 | 8.2 |
| - zinc | mg | 0.64 | 0.9 |
| - copper | mcg | 43.50 | 58.4 |
| - iodine | mcg | 10.15 | 13.6 |
| - manganese | mcg | 7.25 | 9.7 |
| - selenium | mcg | 1.55 | 2.1 |
| Ca/P RATE | | | |
| VITAMINS | | | |
| - vitamin A | mcg | 500.0 | 97.3 |
| - vitamin D | mcg | 10.3 | 2.0 |
| - vitamin E | mg | 12.2 | 2.4 |
| - vitamin K | mcg | 42.0 | 8.2 |
| - vitamin B₁ | mcg | 520.0 | 101.2 |
| - vitamin B₂ | mcg | 620.0 | 120.6 |
| - vitamin B₆ | mcg | 825.0 | 160.5 |
| - vitamin B₁₂ | mcg | 2.0 | 0.4 |
| - vitamin C | mg | 50.0 | 9.7 |
| - folic acid | mcg | 42.0 | 8.2 |
| - calcium pantothenate | mg | 3.2 | 0.6 |
| - nicotinamide | mg | 6.0 | 1.2 |
| - biotin | mcg | 16.0 | 3.1 |
| NUCLEOTIDES | | | |
| - uridine 5'-monophosphate | mg | 9.0 | 1.75 |
| - adenosine 5'-monophosphate | mg | 7.7 | 1.50 |
| ENERGETIC VALUE | kcal | 514 | |

### Study of the effect of the formulas over regulation of the circadian cycles of the sleep-wake phases.

It was performed a prospective, observational, double-blind, food-challenge, randomized study. The objectives were to determinate the child's physical activity in the different phases of the day as a reflection of the different activity in the different sleep-wake phases; to determinate child's sleep hours during day and night and to analyze the characteristics of sleep in breast-fed infants.

### Clinical Study

The study was performed with 8 healthy breast-fed infants presenting an alteration of the circadian rhythm of the sleep-wake phases. During the study, differentiated compositions of the formula were administered, randomly and double-blind, with a global monitoring for 3 weeks:
- Week A with wakefulness stimulating formula from 6 h to 18 h and sleep stimulating formula from 18 h to 6 h.
- Week B with wakefulness stimulating formula during the whole day and night (CONTROL)
- Week C with sleep stimulating formula from 6 h to 18 h and wakefulness stimulating formula from 18 h to 6 h.

Compositions of the wakefulness and the sleep stimulating formulas were those specified above according to Tables 1 and 2.

Clinical monitoring of the children: the physical activity during day and night was continuously monitored with an activemeter placed at the left ankle. The activity was recorded in a computer program for its detailed evaluation. Furthermore, a time registry of sleep and wakefulness span of each child along the 24 hours of the day was also recorded (sleep-diary). Hours and amounts of formula ingested were exactly recorded daily.

From the motor activity registry by activemetrics and from the daily sleep-diary made by the parents, the following parameters were calculated:
a) number of sleep hours
b) sleep efficiency
c) time of immobility
d) number of awakenings

Results of activity registered by activemetrics: the best results obtained in a week were chosen as reference, represented by a 100%. The best result was recorded in the third week (corresponding to the pattern defined as week A: with wakefulness stimulating formula from 6 h to 18 h and sleep stimulating formula from 18 h to 6 h) with a statistically significant difference with regard to the second week (corresponding to the pattern defined as week B, control, with wakefulness stimulating formula during the whole day and night).

**TABLE 3A. Result of the number of sleep hours**

| % of sleep | average | error |
|---|---|---|
| week 1 | 86.37 | 2.1 |
| week 2 | 82.55 | 2.54 |
| week 3 | 100 | 1.83 |

**TABLE 3B. Result of sleep efficiency**

| % of sleep efficiency | average | error |
|---|---|---|
| week 1 | 93.57 | 1.35 |
| week 2 | 93.34 | 1.65 |
| week 3 | 100 | 1.07 |

**TABLE 3C. Time result (minutes of immobility)**

| % minutes of immobility | average | error |
|---|---|---|
| week 1 | 83.62 | 2.29 |
| week 2 | 79.13 | 3.24 |
| week 3 | 100 | 2.16 |

**TABLE 3D. Result of number of awakenings**

| % awakenings | average | error |
|---|---|---|
| week 1 | 103.24 | 6.59 |
| week 2 | 169.06 | 20.06 |
| week 3 | 100 | 5.33 |

a) number of sleep hours: a 17% more
b) sleep efficiency: a 3% more
c) time of immobility: a 10% more
d) number of awakenings: a 70% less

Statistically significant differences between the first week (control) and the second week were not obtained (corresponding to the pattern defined as week C with sleep stimulating formula from 6 h to 18 h and wakefulness stimulating formula from 18 h to 6 h).

Results of the sleep-diary: the best results obtained in a week were chosen as reference, represented by a 100%. The best result was also recorded in the third week.

**TABLE 4. Result of the number of sleep hours according to sleep-diaries**

| % of sleep | average | error |
|---|---|---|
| week 1 | 91.13 | 2.22 |
| week 2 | 91.95 | 2.36 |
| week 3 | 100 | 1.73 |

a) number of sleep hours: a 8% more

Statistically significant differences were not obtained between the first week (control) and the second week (corresponding to the pattern defined as week C).

### Extrahospitalary Study

The study was performed with 35 healthy breast-fed infants, between 2 and 6 months old, presenting an alteration of the circadian rhythm of the sleep-wake phases. During the study, differentiated compositions of the formula were administered, randomly and double-blind, with a global monitoring for 2 weeks:
- Week A with standard infant formula the whole day and night (CONTROL)
- Week B with wakefulness stimulating formula from 6 h to 18 h and sleep stimulating formula from 18 h to 6 h.

Compositions of the wakefulness and the sleep stimulating formulas were those specified above according to Tables 1 and 2.

Monitoring of the children: Data was registered by pediatricians at the first, 7^{th} and 14^{th} days of the study. Furthermore, a time registry of sleep and wakefulness span along the 24 hours of the day, and a time registry of the span needed by the child to get to sleep were also recorded by the parents (sleep-diary). Hours and amounts of formula ingested were exactly recorded daily.

From the registry by the pediatricians and the daily sleep-diary made by the parents, the following parameters were calculated:
a) number of sleep hours
b) sleep efficiency
d) number of awakenings
e) sleep onset span
f) sleep onset span after awakening at night
g) difficulties to getting to sleep.

Results registered by pediatricians: the best results obtained were chosen as reference, represented by a 100%. The best result was recorded in the second week (corresponding to the pattern defined as week B: with wakefulness stimulating formula from 6 h to 18 h and sleep stimulating formula from 18 h to 6 h) with a statistically significant difference with regard to the first week (corresponding to the pattern defined as week A, control, with standard infant formula during the whole day and night).

**TABLE 5A. Result of the number of sleep hours**

| % of sleep | average |
|---|---|
| week A | 87.35 |
| week B | 100 |

**TABLE 5B. Result of sleep efficiency**

| % of sleep efficiency | average |
|---|---|
| week A | 87.58 |
| week B | 100 |

**TABLE 5C. Result of number of awakenings**

| % awakenings | average |
|---|---|
| week A | 162.5 |
| week B | 100 |

**TABLE 5D. Sleep onset span**

| % Minutes | average |
|---|---|
| week A | 153.80 |
| week B | 100 |

**TABLE 5E. Sleep onset span after awakening at night**

| % Minutes | average |
|---|---|
| week A | 240 |
| week B | 100 |

**TABLE 5F. Difficulties to getting to sleep**

| % Affirmative | average |
|---|---|
| week A | 161.3 |
| week B | 100 |

a) number of sleep hours: a 13% more
b) sleep efficiency: a 12% more
c) number of awakenings: a 63% less
d) sleep onset span: a 54% less
e) sleep onset span after awakening at night: a 140% less
f) Difficulties to getting to sleep: a 61 % less

Results of the sleep-diary: the best results obtained in a week were chosen as reference, represented by a 100%. The best result was also recorded in the second week.

**TABLE 6A. Result of the number of sleep hours according to sleep-diaries**

| % of sleep | average |
|---|---|
| week A | 88.75 |
| week B | 100 |

**TABLE 6B. Result of sleep efficiency**

| % of sleep efficiency | average |
|---|---|
| week A | 80.14 |
| week B | 100 |

**TABLE 6C. Result of number of awakenings**

| % awakenings | average |
|---|---|
| week A | 230.77 |
| week B | 100 |

**TABLE 6D. Sleep onset span**

| %Minutes | average |
|---|---|
| week A | 169.41 |
| week B | 100 |

a) number of sleep hours: a 11% more
b) sleep efficiency: a 20% more
c) number of awakenings: a 131% less
d) sleep onset span: a 69% less

Statistically significant differences were not obtained between the first week (control) and the second week (corresponding to the pattern defined as week B).

In conclusion, the results of the studies show an improvement in the quality of sleep, achieving an increase of sleep hours, a better efficiency, a higher grade of immobility and a lower number of awakenings. The improved diet has achieved to modify the analyzed parameters in a statistically significant grade.

## Claims

1. An infant nutritional kit which comprises:
a wakefulness stimulating formula comprising a maximum of 1.7 g of tryptophan per 100 g of total protein of said formula and;
a sleep stimulating formula comprising a minimum of 3.4 g of tryptophan per 100 g of total protein of said formula.

2. The kit according to claim 1, wherein the sleep stimulating formula has a content of tryptophan coming from alpha-lactalbumin between 0.1 and 2.2 g/100 g of total protein of said formula.

3. The kit according to claim 2, wherein the content of tryptophan coming from alpha-lactalbumin is between 0.4 and 0.5 g/100 g of total protein.

4. The kit according to any of the preceding claims, wherein the formulas comprise nucleotides, being the individual amounts of the nucleotides guanosine 5'-monophosphate, cytidine 5'-monophosphate and inosine 5'-monophosphate bigger in the wakefulness stimulating formula than in the sleep stimulating formula and, being the individual amounts of the nucleotides uridine 5'-monophosphate and adenosine 5'-monophosphate bigger in the sleep stimulating formula than in the wakefulness stimulating formula.

5. The kit according to claim 4, wherein neither uridine 5'-monophosphate nor adenosine 5'-monophosphate are contained in the wakefulness stimulating formula and, neither guanosine 5'-monophosphate, cytidine 5'-monophosphate nor inosine 5'-monophosphate are contained in the sleep stimulating formula.

6. The kit according to any of the claims 4-5, wherein in the wakefulness stimulating formula, the amount of cytidine 5'-monophosphate is bigger than the individual amounts of guanosine 5'-monophosphate and inosine 5'-monophosphate

7. The kit according to any of the claims 4-6, wherein in the sleep stimulating formula, the amount of uridine 5'-monophosphate is bigger than the amount of adenosine 5'-monophosphate.

8. The kit according to any of the preceding claims, wherein the amount of cytidine 5'-monophosphate in the wakefulness stimulating formula is between 1 and 2.5 mg/100 kcal of said formula.

9. The kit according to claim 8, wherein the amount of cytidine 5'-monophosphate is 1.5 mg/100 kcal.

10. The kit according to any of the preceding claims, wherein the amount of guanosine 5'-monophosphate in the wakefulness stimulating formula is between 0.1 and 0.5 mg/100 kcal of said formula.

11. The kit according to claim 10, wherein the amount of guanosine 5'-monophosphate is 0.3 mg/100 kcal.

12. The kit according to any of the preceding claims, wherein the amount of inosine 5'-monophosphate in the wakefulness stimulating formula is between 0.2 and 1 mg/100 kcal of said formula.

13. The kit according to claim 12, wherein the amount of inosine 5'-monophosphate is 0.3 mg/100 kcal.

14. The kit according to any of the preceding claims, wherein the amount of uridine 5'-monophosphate in the sleep stimulating formula is between 1 and 1.75 mg/100 kcal of said formula.

15. The kit according to claim 14, wherein the amount of uridine 5'-monophosphate is 1.75 mg/100 kcal.

16. The kit according to any of the preceding claims, wherein the amount of adenosine 5'-monophosphate in the sleep stimulating formula is between 0.5 and 1.5 mg/100 kcal of said formula.

17. The kit according to claim 16, wherein the amount of adenosine 5'-monophosphate is 1.5 mg/100 kcal.

18. The kit according to any of the preceding claims, wherein the sleep stimulating formula comprises medium-chain triacylglycerols.

19. The kit according to claim 18, wherein the amount of medium-chain triacylglycerols is between 5 and 25% versus the total amount of fats of the sleep stimulating formula.

20. The kit according to claim 19, wherein the amount of medium-chain triacylglycerols is a 15% versus the total amount of fats.

21. The kit according to any of the preceding claims, wherein the wakefulness stimulating formula does not contain medium-chain triacylglycerols and, the sleep stimulating formula does not contain poly-unsaturated fatty acids.

22. The kit according to any of the preceding claims, wherein the formulas comprise vitamins A, E, B₁₂ and C, being the individual amounts of said vitamins bigger in the wakefulness stimulating formula than in the sleep stimulating formula.

23. An infant nutritional formula which stimulates wakefulness, which comprises a maximum of 1.7 g of tryptophan per 100 g of total protein, the nucleotides cytidine 5'-monophosphate, guanosine 5'-monophosphate and inosine 5'-monophosphate and does not comprise the nucleotides uridine 5'-monophosphate and adenosine 5'-monophosphate.

24. The formula according to claim 23, wherein the amount of cytidine 5'-monophosphate is bigger than the individual amounts of guanosine 5'-monophosphate and inosine 5'-monophosphate.

25. The formula according to any of claims 23-24, wherein the amount of cytidine 5'-monophosphate is between 1 and 2.5 mg/100 kcal.

26. The formula according to claim 25, wherein the amount of cytidine 5'-monophosphate is 1.5 mg/100 kcal.

27. The formula according any of the claims 23-26, wherein the amount of guanosine 5'-monophosphate is between 0.1 and 0.5 mg/100 kcal.

28. The formula according to claim 27, wherein the amount of guanosine 5'-monophosphate is 0.3 mg/100 kcal.

29. The formula according to any of the claims 23-28, wherein the amount of inosine 5'-monophosphate is between 0.2 and 1 mg/100 kcal.

30. The formula according to claim 29, wherein the amount of inosine 5'-monophosphate is 0.3 mg/100 kcal.

31. The formula according to any of the claims 23-29, which does not contain medium-chain triacylglycerols.

32. An infant nutritional formula which stimulates sleep, which comprises a minimum of 3.4 g of tryptophan per g of total protein, the nucleotides uridine 5'-monophosphate and adenosine 5'-monophosphate and does not comprise the nucleotides cytidine 5'-monophosphate, guanosine 5'-monophosphate and inosine 5'-monophosphate.

33. The formula according to claim 32, **characterized by** having a content of tryptophan coming from alpha-lactalbumin between 0.1 and 2.2 g/100 g of total protein.

34. The formula according to claim 33, wherein the content of tryptophan coming from alpha-lactalbumin is 0.4-0.5 g/100 g of total protein.

35. The formula according to any of the claims 32-34, wherein the amount of uridine 5'-monophosphate is bigger than the amount of adenosine 5'-monophosphate.

36. The formula according any of the claims 32-35, wherein the amount of uridine 5'-monophosphate is between 1 and 1.75 mg/100 kcal.

37. The formula according to claim 36, wherein the amount of uridine 5'-monophosphate is 1.75 mg/100 kcal.

38. The formula according to any of the claims 32-35, wherein the amount of adenosine 5'-monophosphate is between 0.5 and 1.5 mg/100 kcal.

39. The formula according to claim 38, wherein the amount of adenosine 5'-monophosphate is 1.5 mg/100 kcal.

40. The formula according to any of the claims 32-39, comprising medium-chain triacylglycerols.

41. The formula according to claim 40, wherein the amount of medium-chain triacylglycerols is between 5 and 25 % versus the total amount of fat.

42. The formula according to claim 41, wherein the amount of medium-chain triacylglycerols is 15 % versus the total amount of fat.

43. The formula according to any of the claims 32-42, which does not contain poly-unsaturated fatty acids.

## Patentansprüche

1. Eine Kindernahrungspackung, folgendes enthaltend:
- eine Formel zur Stimulierung der Wachsamkeit mit einem Maximum von 1.7 g Tryptophan pro 100 g des gesamten Proteins von besagter Formel und:
- eine Formel zur Stimulierung des Schlafs mit einem Minimum von 3.4 g Tryptophan pro 100 g des gesamten Proteins von besagter Formel.

2. Die Packung nach Anspruch 1, worin die Formel zur Stimulierung des Schlafs einen Gehalt an Tryptophan aufweist, das aus Alpha-Lactalbumin zwischen 0.1 und 2.2 g/100 g des gesamten Proteins von besagter Formel stammt.

3. Die Packung nach Anspruch 2, worin der Gehalt an Tryptophan, das aus Alpha-Lactalbumin stammt, zwischen 0.4 und 0.5 g/100 g des gesamten Proteins beträgt.

4. Die Packung nach einem der vorherigen Ansprüche, worin die Formeln Nukleotide enthalten, wobei die individuellen Mengen an Nukleotiden Guanosin 5'-monophosphat, Cytidin 5'-monophosphat und Inosin 5'-monophosphat in der Formel zur Stimulierung der Wachsamkeit größer als in der Formel zur Stimulierung des Schlafs sind und wobei die individuellen Mengen an Nukleotiden Uridin 5'-monophosphat und Adenosin 5'-monophosphat in der Formel zur Stimulierung des Schlafs größer als in der Formel zur Stimulierung der Wachsamkeit sind.

5. Die Packung nach Anspruch 4, worin weder Uridin 5'-monophosphat noch Adenosin 5'-monophosphat in der Formel zur Stimulierung der Wachsamkeit enthalten sind und weder Guanosin 5'-monophosphat, Cytidin 5'-monophosphat noch Inosin 5'-monophosphat in der Formel zur Stimulierung des Schlafs enthalten sind.

6. Die Packung gemäß einem der Ansprüche 4 - 5, worin in der Formel zur Stimulierung der Wachsamkeit die Menge an Cytidin 5'-monophosphaten größer als die individuellen Mengen an Guanosin 5'-monophosphaten und Inosin 5'-monophosphaten ist.

7. Die Packung gemäß einem der Ansprüche 4 - 6, worin in der Formel zur Stimulierung des Schlafs die Menge an Uridin 5'-monophosphaten größer als die Menge an Adenosin 5'-monophosphaten ist.

8. Die Packung nach einem der vorherigen Ansprüchen, worin die Menge an Cytidin 5'-monophosphaten in der Formel zur Stimulierung der Wachsamkeit zwischen 1 und 2.5 mg/100 kcal von besagter Formel beträgt.

9. Die Packung nach Anspruch 8, worin die Menge an Cytidin 5'-monophosphaten 1.5 mg/100 kcal beträgt.

10. Die Packung nach einem der vorherigen Ansprüchen, worin die Menge an Guanosin 5'-monophosphaten in der Formel zur Stimulierung der Wachsamkeit zwischen 0.1 und 0.5 mg/100 kcal von besagter Formel beträgt.

11. Die Packung nach Anspruch 10, worin die Menge an Guanosin 5'-monophosphaten 0.3 mg/100 kcal beträgt.

12. Die Packung nach einem der vorherigen Ansprüchen, worin die Menge an Inosin 5'-monophosphaten in der Formel zur Stimulierung der Wachsamkeit zwischen 0.2 und 1 mg/100 kcal von besagter Formel beträgt.

13. Die Packung nach Anspruch 12, worin die Menge an Inosin 5'-monophosphaten 0.3 mg/100 kcal beträgt.

14. Die Packung nach einem der vorherigen Ansprüchen, worin die Menge an Uridin 5'-monophosphaten in der Formel zur Stimulierung des Schlafs zwischen 1 und 1.75 mg/100 kcal von besagter Formel beträgt.

15. Die Packung nach Anspruch 14, worin die Menge an Uridin 5'-monophosphaten 1.75 mg/100 kcal beträgt.

16. Die Packung nach einem der vorherigen Ansprüchen, worin die Menge an Adenosin 5'-monophosphaten in der Formel zur Stimulierung des Schlafs zwischen 0.5 und 1.5 mg/100 kcal von besagter Formel beträgt.

17. Die Packung nach Anspruch 16, worin die Menge an Adenosin 5'-monophosphaten 1.5 mg/100 kcal beträgt.

18. Die Packung nach einem der vorherigen Ansprüchen, worin die Formel zur Stimulierung des Schlafs ein mittelkettiges Triacylglycerol enthält.

19. Die Packung nach Anspruch 18, worin die Menge an mittelkettigem Triacylglycerol zwischen 5 und 25% im Vergleich zum Gesamtbetrag von Fetten der Formel zur Stimulierung des Schlafs beträgt.

20. Die Packung nach Anspruch 19, worin die Menge an mittelkettigem Triacylglycerol 15% im Vergleich zum Gesamtbetrag von Fetten ist.

21. Die Packung nach einem der vorherigen Ansprüche, worin die Formel zur Stimulierung der Wachsamkeit kein mittelkettiges Triacylglycerol enthält und die Formel zur Stimulierung des Schlafs keine mehrfach ungesättigten Fettsäuren enthält.

22. Die Packung nach einem der vorherigen Ansprüchen, worin die Formeln die Vitamine A, E, B₁₂ und C enthalten, wobei die individuellen Mengen an besagten Vitaminen in der Formel zur Stimulierung der Wachsamkeit größer als in der Formel zur Stimulierung des Schlafs ist.

23. Eine Kindernahrungsformel, die die Wachsamkeit stimuliert und die ein Maximum von 1.7 g Tryptophan pro 100 g des gesamten Proteins enthält, die Nukleotide Cytidin 5'-monophosphat, Guanosin 5'-monophosphat und Inosin 5'-monophosphat enthält und die Nukleotide Uridin 5'-monophosphat und Adenosin 5'-monophosphat nicht enthält.

24. Die Formel nach Anspruch 23, worin die Menge an Cytidin 5'-monophosphaten größer als die individuellen Mengen an Guanosin 5'-monophosphaten und Inosin 5'-monophosphaten ist.

25. Die Formel nach einem der Ansprüche 23 - 24, worin die Menge an Cytidin 5'-monophosphaten zwischen 1 und 2.5 mg/100 kcal beträgt.

26. Die Formel nach Anspruch 25, worin die Menge an Cytidin 5'-monophosphaten 1.5 mg/100 kcal beträgt.

27. Die Formel entsprechend einem der Ansprüche 23 - 26, worin die Menge an Guanosin 5'-monophosphaten zwischen 0.1 und 0.5 mg/100 kcal beträgt.

28. Die Formel nach Anspruch 27, worin die Menge an Guanosin 5'-monophosphaten 0.3 mg/100 kcal beträgt.

29. Die Formel gemäß einem der Ansprüche 23 - 28, worin die Menge an Inosin 5'-monophosphaten zwischen 0.2 und 1 mg/100 kcal beträgt.

30. Die Formel nach Anspruch 29, worin die Menge an Inosin 5'-monophosphaten 0.3 mg/100 kcal beträgt.

31. Die Formel gemäß einem der Ansprüche 23 - 29, die kein mittelkettiges Triacylglycerol enthält.

32. Eine Kindernahrungsformel zur Stimulierung des Schlafs, die ein Minimum von 3.4 g Tryptophan pro g des gesamtem Proteins und die Nukleotide Uridin 5'-monophosphat und Adenosin 5'-monophosphat enthält und die Nukleotide Cytidin 5'-monophosphat, Guanosin 5'-monophosphat und Inosin 5'-monophosphat nicht enthält.

33. Die Formel nach Anspruch 32, **dadurch gekennzeichnet, dass** diese einen Gehalt an Tryptophan aufweist, das von Alpha-Laktalbumin zwischen 0.1 und 2.2 g/100 g des gesamten Proteins stammt.

34. Die Formel nach Anspruch 33, worin der Gehalt an Tryptophan, das von Alpha-Lactalbumin stammt, 0.4-0.5 g/100 g des gesamten Proteins beträgt.

35. Die Formel gemäß einem der Ansprüche 32 - 34, worin die Menge an Uridin 5'-monophosphaten größer ist als die Menge an Adenosin 5'-monophosphaten.

36. Die Formel entsprechend einem der Ansprüche 32 - 35, worin die Menge an Uridin 5'-monophosphaten zwischen 1 und 1.75 mg/100 kcal beträgt.

37. Die Formel nach Anspruch 36, worin die Menge an Uridin 5'-monophosphaten 1.75 mg/100 kcal beträgt.

38. Die Formel gemäß einem der Ansprüche 32 - 35, worin die Menge an Adenosin 5'-monophosphaten zwischen 0.5 und 1.5 mg/100 kcal beträgt.

39. Die Formel nach Anspruch 38, worin die Menge an Adenosin 5'-monophosphaten 1.5 mg/100 kcal beträgt.

40. Die Formel gemäß einem der Ansprüche 32 - 39, die ein mittelkettiges Triacylglycerol enthält.

41. Die Formel nach Anspruch 40, worin die Menge an mittelkettigem Triacylglycerol zwischen 5 und 25 % im Vergleich zum Gesamtbetrag von Fett beträgt.

42. Die Formel nach Anspruch 41, worin die Menge an mittelkettigem Triacylglycerol 15 % im Vergleich zum Gesamtbetrag von Fett beträgt.

43. Die Formel gemäß einem der Ansprüche 32 - 42, die keine mehrfach ungesättigte Fettsäuren enthält.

## Revendications

1. Kit nutritionnel pour enfants comprenant:
une formule stimulant l'état de veille comprenant un maximum de 1.7 g de tryptophane par 100 g de protéine totale de ladite formule et,
une formule stimulant le sommeil comprenant un minimum de 3.4 g de tryptophane par 100 g de protéine totale de ladite formule.

2. Kit selon la revendication 1, où la formule stimulant le sommeil possède un contenu en tryptophane provenant de l'alpha-lactalbumine compris entre 0.1 et 2.2 g/100g de protéine totale de ladite formule.

3. Kit selon la revendication 2, où le contenu en tryptophane provenant de l'alphalactalbumine est compris entre 0.4 et 0.5 g/100 g de protéine totale.

4. Kit selon l'une quelconque des revendications précédentes, où les formules contiennent des nucléotides, les quantités individuelles des nucléotides, tels que guanosine 5'-monophosphate, cytidine 5'-monophosphate et inosine 5'-monophosphate, étant plus élevées dans la formule stimulant l'état de veille que dans la formule stimulant le sommeil et les quantités individuelles de nucléotides, comme l'uridine 5'-monophosphate et l'adénosine 5'-monophosphate, étant plus élevées dans la formule stimulant le sommeil que dans la formule stimulant l'état de veille.

5. Kit selon la revendication 4, où ni l'uridine 5'-monophosphate ni l'adénosine 5'-monophosphate sont contenues dans la formule stimulant l'état de veille et où, ni la guanosine 5'-monophosphate, cytidine 5'-monophosphate ni l'inosine 5'-monophosphate sont contenues dans la formule stimulant le sommeil.

6. Kit selon l'une quelconque des revendications 4-5, où dans la formule stimulant l'état de veille, la quantité de cytidine 5'-monophosphate est plus élevée que les quantités individuelles de guanosine 5'-monophosphate et d'inosine 5'-monophosphate

7. Kit selon l'une quelconque des revendications 4 à 6, où dans la formule stimulant le sommeil, la quantité d'uridine 5'-mono phosphate est plus élevée que la quantité d'adénosine 5'-monophosphate.

8. Kit selon l'une quelconque des revendications précédentes, où la quantité de cytidine 5'-monophosphate dans la formule stimulant l'état de veille est comprise entre 1 et 2.5 mg/100 kcal de ladite formule.

9. Kit selon la revendication 8, où la quantité de cytidine 5'-monophosphate est de 1.5 mg/100 kcal.

10. Kit selon l'une quelconque des revendications précédentes, où la quantité de guanosine 5'-monophosphate dans la formule stimulant l'état de veille est comprise entre 0.1 et 0.5 mg/100 kcal de ladite formule.

11. Kit selon la revendication 10, où la quantité de guanosine 5'-monophosphate est de 0.3 mg/100 kcal.

12. Kit selon l'une quelconque des revendications précédentes, où la quantité d'inosine 5'-monophosphate dans la formule stimulant l'état de veille est comprise entre 0.2 et 1 mg/100 kcal de ladite formule.

13. Kit selon la revendication 12, où la quantité d'inosine 5'-monophosphate est de 0.3 mg/100 kcal.

14. Kit selon l'une quelconque des revendications précédentes, où la quantité d'uridine 5'-monophosphate dans la formule stimulant le sommeil est comprise entre 1 et 1.75 mg/100 kcal de ladite formule.

15. Kit selon la revendication 14, où la quantité d'uridine 5'-monophosphate est de 1.75 mg/100 kcal.

16. Kit selon l'une quelconque des revendications précédentes, où la quantité d'adénosine 5'-monophosphate dans la formule stimulant le sommeil est comprise entre 0.5 et 1. 5 mg/100 kcal de ladite formule.

17. Kit selon la revendication 16, où la quantité d'adénosine 5'-monophosphate est de 1.5 mg/100 kcal.

18. Kit selon l'une quelconque des revendications précédentes, où la formule stimulant le sommeil contient des triacylglycérols à chaîne moyenne.

19. Kit selon la revendication 18, où la quantité de triacylglycérols à chaîne moyenne est comprise entre 5 et 25% par rapport à la quantité totale de matières grasses de la formule stimulant le sommeil.

20. Kit selon la revendication 19, où la quantité de triacylglycérols à chaîne moyenne est de 15% para rapport à la quantité totale de matières grasses.

21. Kit selon l'une quelconque des revendications précédentes, où la formule stimulant l'état de veille ne contient pas de triacylglycérols à chaîne moyenne et la formule stimulant le sommeil ne contient pas d'acides gras polyinsaturés.

22. Kit selon l'une quelconque des revendications précédentes, où les formules contiennent des vitamines A, E, B₁₂ et C, les quantités individuelles desdites vitamines étant plus élevées dans la formule stimulant l'état de veille que dans la formule stimulant le sommeil.

23. Formule nutritionnelle pour enfant pour stimuler l'état de veille, qui contient un maximum de 1.7 g de tryptophane par 100 g de protéine totale, les nucléotides cytidine 5'-monophosphate, guanosine 5'-monophosphate et inosine 5'-monophosphate et ne contient pas de nucléotides uridine 5'-monophosphate et adénosine 5'-monophosphate.

24. Formule selon la revendication 23, où la quantité de cytidine 5'-monophosphate est plus élevée que les quantités individuelles de guanosine 5'-monophosphate et d'inosine 5'-monophosphate.

25. Formule selon l'une quelconque des revendications 23-24, où la quantité de cytidine 5'-monophosphate est comprise entre 1 et 2.5 mg/100 kcal.

26. Formule selon la revendication 25, où la quantité de cytidine 5'-monophosphate est de 1.5 mg/100 kcal.

27. Formule selon l'une quelconque des revendications 23-26, où la quantité de guanosine 5'-monophosphate est comprise entre 0.1 et 0.5 mg/100 kcal.

28. Formule selon la revendication 27, où la quantité de guanosine 5'-monophosphate est de 0.3 mg/100 kcal.

29. Formule selon l'une quelconque des revendications 23 à 28, où la quantité d'inosine 5'-monophosphate est comprise entre 0.2 et 1 mg/100 kcal.

30. Formule selon la revendication 29, où la quantité d'inosine 5'-monophosphate est de 0.3 mg/100 kcal.

31. Formule selon l'une quelconque des revendications 23 à 29, laquelle ne contient pas de triacylglycérols à chaîne moyenne.

32. Formule nutritionnelle pour enfant pour stimuler le sommeil, qui contient un minimum de 3.4 g de tryptophane par g de protéine totale, les nucléotides uridine 5'-monophosphate et adénosine 5'-monophosphate et ne contient pas de nucléotides cytidine 5'-monophosphate, guanosine 5'-monophosphate et inosine 5'-monophosphate.

33. Formule selon la revendication 32, **caractérisée par le fait qu'**elle possède un contenu en tryptophane provenant de l'alpha-lactalbumine compris entre 0.1 et 22 g de g/100 g de protéine totale.

34. Formule selon la revendication 33, où le contenu en tryptophane provenant de l'alpha-lactalbumine est de 0.4-0.5 g par g/100 g de protéine totale.

35. Formule selon l'une quelconque des revendications 32-34, où la quantité d'uridine 5'-monophosphate est plus élevée que la quantité d'adénosine 5'-monophosphate.

36. Formule selon l'une quelconque des revendications 32-35, où la quantité d'uridine 5'-monophosphate est comprise entre 1 et 1.75 mg/100 kcal.

37. Formule selon la revendication 36, où la quantité d'uridine 5'-monophosphate est de 1.75 mg/100 kcal.

38. Formule selon l'une quelconque des revendications 32 à 35, où la quantité d'adénosine 5'-monophosphate est comprise entre 0.5 et 1.5 mg/100 kcal.

39. Formule selon la revendication 38, où la quantité d'adénosine 5'-monophosphate est de 1.5 mg/100 kcal.

40. Formule selon l'une quelconque des revendications 32 à 39, contenant des triacylglycérols à chaîne moyenne.

41. Formule selon la revendication 40, où la quantité de triacylglycérols à chaîne moyenne est comprise entre 5 et 25 % par rapport à la quantité totale de matière grasse.

42. Formule selon la revendication 41, où la quantité de triacylglycérols à chaîne moyenne est de 15 % par rapport à la quantité totale de matière grasse.

43. Formule selon l'une quelconque des revendications 32 à 42, laquelle ne contient pas d'acides gras polyinsaturés.
